# EUROPÄISCHE PATENTANMELDUNG

(11) **EP 2 006 523 A1**
(43) Veröffentlichungstag der Anmeldung: **24.12.2008**
(21) Anmeldenummer: 08155174.9
(22) Anmeldetag: 25.04.2008
(51) Int. Cl.: F02F 7/00, F16C 5/00

(54) **Kreuzkopf-Grossdieselmotor**

(30) Priorität: 18.06.2007 EP 07110482
(71) Anmelder: Wärtsilä Schweiz AG, 8401 Winterthur (CH)
(72) Erfinder: Kiser, Silvan, 8400 Winterthur (CH); Sönnichsen, Samuel, 8405 Winterthur (CH)
(74) Vertreter: Sulzer Management AG

(57) **Zusammenfassung**

Die Erfindung betrifft einen Kreuzkopf-Grossdieselmotor (1) mit einer Grundplatte (2) zur Aufnahme einer sich entlang einer Motorachse (31) erstreckenden Kurbelwelle (3), einem zwei Aussenwände (4) umfassenden Ständer (5), welcher auf der Grundplatte (2) angeordnet ist, sowie eine auf dem Ständer (5) angeordnete Zylindersektion (6) zur Aufnahme von Zylindern. Dabei sind die Grundplatte (2), der Ständer (5) und die Zylindersektion (6) durch zwei Zuganker (7) miteinander verbunden, die sich im Ständer (5) jeweils im Bereich eines durch zwei transversale Stützwände (8) einwandig ausgestalteten Stützkörpers (9) erstrecken. Der Stützkörper (9) umfasst dabei zwei Gleitflächen (10) zur Abstützung jeweils eines Gleitschuhes (11) eines Kreuzkopfes (12). Erfindungsgemäss sind zwei benachbarte Gleitschuhe (11) in Bezug auf die Motorachse (31) alternierend am Stützkörper (9) abgestützt.

## Beschreibung

Die Erfindung betrifft einen Kreuzkopf-Grossdieselmotor gemäss dem Oberbegriff des unabhängigen Anspruchs 1.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfasst entsprechend der Anzahl der Zylinder des Grossdieselmotors mehrere Stützkörper, die jeweils zwei senkrecht verlaufende Gleitflächen zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt.

Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern plaziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

Ein verwandtes Konzept wird in der EP 0 774 061 B1 verfolgt. Hier wird mit einem Stützkörper gearbeitet, in welchem die Zuganker geführt sind und der anstatt eines rechteckigen Querschnitts einen dreiecksförmigen Querschnitt aufweist und somit ebenfalls als doppelwandig zu bezeichnen ist.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Der aus diesem Stand der Technik bekannte Aufbau eines Kreuzkopf-Grossdieselmotors hat dabei einige gravierende Nachteile. Die Stützelemente werden in der Grundplatte durch Schweissnähte fixiert. Wenn die Stützelemente und die Stützkörper durch zwei gegenüber angeordnete Wände doppelwandig ausgestaltet sind, können die Schweissnähte zwischen zwei Wänden, die ein doppelwandiges, also in Querschnittsrichtung geschlossenes Stützelement bzw. einen geschlossenen Stützkörper bilden, nicht gegengeschweisst werden, so dass sich die entsprechenden Probleme zur Erreichung der notwendigen Qualität ergeben.

Darüber hinaus sind die Zuganker am unteren Ende des Sattels, also unterhalb der Kurbelwelle fixiert, so dass die Zuganker durch Bohrungen im Lagersattel, durch sogenannte Zugankerpfeifen, bis in einen unteren Bereich des Lagersattel geführt werden müssen. Da die Zuganker unter erheblicher Vorspannung unterhalb des Lagersattels fixiert werden müssen, führt das zu erheblichen Verspannungen im Lagersattel und zu Deformationen der Lagerschale. Damit ist die bekannte Grundplatte relativ steif und rein konstruktiv relativ aufwendig.

Zur Vermeidung vorgenannter Probleme mit dem Ständer wurde in der EP 1 382 829 daher ein Kreuzkopf-Grossdieselmotor vorgeschlagen, der eine einwandig ausgestaltete Grundplatte und einen doppelwandigen Ständer aufweist. Dabei sind die Grundplatte, der Ständer und die Zylindersektion durch Zuganker miteinander verbunden, wobei sich der Zuganker im Bereich des Ständers innerhalb des doppelwandigen Stützkörpers erstreckt und in einem Lagersattel der Grundplatte fixiert ist.

Was die Stabilität und den Aufbau des Ständers insgesamt und vor allem das Zusammenwirken der Grundplatte mit dem übrigen Ständeraufbau betrifft, hat die Lösung gemäss EP 1 382 829 zwar im Vergleich mit dem seinerzeit bekannten Stand der Technik zu enormen Verbesserungen geführt. Jedoch sind auch bei dem aus der EP 1 382 829 bekannten Ständer die Zuganker oberhalb der Grundplatte innerhalb eines geschlossenen Stützkörpers geführt. Derartige Stützkörper garantieren zwar die notwendige Stabilität des Ständers, sind aber schwierig zu schweissen und insbesondere können die Schweissnähte im Inneren des Stützkörpers nicht gegengeschweisst werden. Ein weiterer damit zusammenhängender Nachteil ist, dass nach dem Zusammenschweissen des Stützkörpers die Schweissnähte innerhalb des Stützkörpers nicht direkt in Augenschein genommen und inspiziert werden können. Zur Qualitätssicherung werden die Schweissnähte daher mit aufwendigen technischen Methoden, wie z.B. mittels Ultraschall von aussen untersucht, was sehr zeitaufwendig, teuer und zudem bei komplizierten oder sehr kleinen Schäden auch nicht immer ausreichend zuverlässig ist.

Diese Problematik ist seit langem bekannt und daher wurden auch schon einwandige Stützkörper diskutiert, die im Prinzip einfach gegengeschweisst werden könnten, da sie keine entlang der Längsrichtung geschlossene Röhre bilden. Solche Konzepte mussten jedoch zumindest für die modernen Grossdieselmotoren, die enormen mechanischen Belastungen im Betriebszustand ausgesetzt sind, sämtlich verworfen werden, weil bereits einfache Überlegungen bzw. Berechnungen zeigen, dass derartige einwandige Stützkörper den Belastungen in einem modernen Grossdieselmotor nicht einmal annähernd standhalten können.

Ausgehend vom Stand der Technik ist es die Aufgabe der Erfindung, einen verbesserten Kreuzkopf-Grossdieselmotor vorzuschlagen, bei welchem die durch die Ausgestaltung von Grundplatte und Ständer bekannten Nachteile vermieden werden.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Erfindungsgemäss wird somit ein Kreuzkopf-Grossdieselmotor mit einer Grundplatte zur Aufnahme einer sich entlang einer Motorachse erstreckenden Kurbelwelle, einem zwei Aussenwände umfassenden Ständer, welcher auf der Grundplatte angeordnet ist, sowie eine auf dem Ständer angeordnete Zylindersektion zur Aufnahme von Zylindern vorgeschlagen. Dabei sind die Grundplatte, der Ständer und die Zylindersektion durch zwei Zuganker miteinander verbunden, die sich im Ständer jeweils im Bereich eines durch zwei transversale Stützwände einwandig ausgestalteten Stützkörpers erstrecken. Der Stützkörper umfasst dabei zwei Gleitflächen zur Abstützung jeweils eines Gleitschuhes eines Kreuzkopfes. Erfindungsgemäss sind zwei benachbarte Gleitschuhe in Bezug auf die Motorachse alternierend am Stützkörper abgestützt.

Damit wird erfindungsgemäss ein Kreuzkopf-Grossdieselmotor vorgeschlagen, der einen einwandig ausgestalteten Stützkörper, d.h. einen einwandig ausgestalteten Ständer aufweist. Dabei sind die Grundplatte, der Ständer und die Zylindersektion des erfindungsgemässen Kreuzkopf-Grossdieselmotors durch Zuganker miteinander verbunden, wobei sich der Zuganker im Bereich des Ständers nicht wie aus dem Stand der Technik bekannt, innerhalb eines doppelwandigen Stützkörpers erstreckt, sondern sich im Bereich eines einwandigen Stützkörpers im Ständer erstreckt. Das heisst, das der Zuganker entweder neben dem einwandigen Stützkörper verläuft, oder in einer geeigneten Durchführung durch den einwandigen Stützkörper hindurch geführt ist.

Bei den bisher bekannten Konstruktionen wird die Querkraft auf den Ständer je nach Auf- oder Abwärtsbewegung des Kreuzkopfes auf die pumpen- und abgasseitige Gleitbahn abgegeben. Bei dieser Art der Kraftübertragung auf den Ständer ist der Einsatz einwandiger Stützkörper grundsätzlich nicht möglich, da eine einwandige Konstruktion des Ständers, also des Stützkörpers, die Kräfte bei der Auf- und Abwärtsbewegung des Kreuzkopfes, die neben Quer- und Längskräften auch Torsions- und Rotationsmomente umfassen, nicht ausreichend aufnehmen bzw. kompensieren kann.

Somit war allein schon aus Stabilitätsgründen eine doppelwandige Ausführung des Ständers bzw. des Stützkörpers zwingend notwendig.

Dieses Problem wird durch die vorliegende Erfindung dadurch behoben, dass ein Gleitschuh des Kreuzkopfs sowohl bei der Auf- als auch bei der Abwärtsbewegung die Kräfte, insbesondere die Querkräfte, auf entweder die Pumpenseite oder aber, z.B. beim Nachbarkreuzkopf, auf die Abgasseite abgibt. Das ist im Rahmen dieser Anmeldung mit dem Begriff "alternierend" gemeint. Dabei kann selbstverständlich in einem speziellen Beispiel die Kraft auch innerhalb eines Zylinders alternierend auf die Pumpen- und Abgasseite übertragen werden, wobei in einem für die Praxis sehr wichtigen Ausführungsbeispiel die Übertragung der Kraft von einem Zylinder zum nächsten alterniert.

Die Vorteile der erfindungsgemässen Lösung liegen auf der Hand: Die alternierende Kraftübertragung ermöglicht viele neue Konstruktionen der Ständersektion, die bei nicht-alternierender Kraftübertragung grundsätzlich nicht möglich sind. Besonders wichtig ist dabei, dass eine einwandige Ständerkonstruktion verwendet werden kann, so dass die Schweissnähte von allen Seiten frei zugänglich sind.

Es versteht sich, dass im Prinzip die alternierende Kraftübertragung gemäss der vorliegenden Erfindung auch bei den bekannten doppelwandigen Ständern problemlos eingesetzt werden kann, was in ganz bestimmten Fällen besondere Vorteile hinsichtlich Stabilität und Ständerkonstruktion haben kann, wobei bei Verwendung von doppelwandigen Stützkörpern natürlich der wichtige Vorteil der freien Zugänglichkeit der Schweissnähte verloren geht.

Wie bereits erwähnt, ist der Zuganker in einem speziellen Ausführungsbeispiel der vorliegenden Erfindung durch die transversale Stützwand in einer geeigneten Durchführung hindurch geführt.

Für die Praxis sind dabei solche speziellen Ausführungsbeispiele von grösserer Bedeutung, bei denen der Zuganker neben der transversalen Stützwand geführt ist, wobei bevorzugt an jeder transversalen Stützwand mindestens zwei Zuganker vorgesehen sind. Besonders bevorzugt ist dabei bei einem speziellen Zylinder die transversale Stützwand zwischen zwei, oder auch zwischen mehr als zwei Zugankern angeordnet.

Dabei ist im Rahmen dieser Anmeldung unter einer "transversalen" Orientierung, wie üblich eine Orientierung zu verstehen, die im wesentlichen senkrecht zu der Richtung liegt, in welche sich die Achse der Kurbelwelle, also der Motorachse des Grossdieselmotors erstreckt.

Die alternierende Kraftübertragung auf den Ständer bzw. auf die Gleitbahnen an den Stützkörpern kann dabei auf verschiedene Arten realisiert sein. Z. B. können zwei Gleitschuhe ein und desselben Kreuzkopfes in Bezug auf die Motorachse alternierend am Stützkörper abgestützt sind. Die Kreuzköpfe der benachbarten Zylinder sind dann z.B. auf der gegenüberliegenden Seite über die entsprechenden Gleitbahnen am Ständer abgestützt.

In ganz speziellen Fällen ist es sogar möglich, dass z.B. zwei oder mehr direkt benachbarte Kreuzköpfe auf derselben Seite am Ständer abgestützt sind, und andere Gruppen von direkt benachbarten Kreuzköpfen in alternierender Weise in Bezug auf die Motorachse auf der anderen Seite am Ständer abgestützt sind.

In einem weiteren Ausführungsbeispiel ist an einer Mittelwand und / oder an der Gleitfläche des Stützkörpers ein Führungselement zur Führung des Gleitschuhs vorgesehen, so dass die Stabilität der Führung des Gleitschuhs während seiner Hin- und Herbewegung entlang der Gleitbahnen sicher ermöglicht bzw. verbessert wird.

Dabei kann je nach Anforderungen das Führungselement zum Beispiel auch in Form einer transversalen Führungsklaue ausgebildet sein.

In einem anderen Beispiel kann das Führungselement in Form einer transversalen Führungsschiene ausgebildet sein.

Die Grundplatte kann dabei ein- oder zweiseitig ausgestaltet sein und umfasst in an sich bekannter Weise mindestens einen Lagersattel zur Lagerung der Kurbelwelle, wobei der Zuganker im oder am Lagersattel in einem Bereich zwischen der Achse der Kurbelwelle, also der Motorachse und dem Ständer fixiert ist.

Bevorzugt ist der Zuganker im Lagersattel in einem Gewindeteil und / oder in einer Gewindebohrung fixiert, und / oder der Zuganker erstreckt sich durch eine Bohrung im Lagersattel und ist dort durch eine Verschraubung fixiert.

Insbesondere zur gleichzeitigen Erhöhung der Stabilität und der Flexibilität des gesamten Grossdieselmotors unter den enormen mechanischen Belastungen im Betriebszustand kann der Zuganker im Lagersattel in einem Bereich zwischen der Längsachse der Kurbelwelle und dem Ständer in einer Aussparung mittels eines aus der Aussparung entfernbaren Halteelements fixiert sein, wie es zum Beispiel in der europäischen Patentanmeldung EP 06 125603.8 bereits vorgeschlagen wurde.

Die Erfindung wird im folgenden an Hand der Zeichnung näher erläutert. Es zeigen in schematischer Darstellung:
- Fig. 1: Schnitt durch einen erfindungsgemässen Kreuzkopf-Grossdieselmotor mit Grundplatte, Ständer und Zylindersektion;
- Fig. 2a: einen Schnitt I - I gemäss Fig. 1 durch einen bekannten Motor mit doppelwandigem Stützkörper und einwandig ausgestaltetem Stützelement;
- Fig. 2b: einen Schnitt II - II gemäss Fig. 1 durch einen bekannten Motor mit je zwei doppelwandigen Stützkörpern zwischen zwei benachbarten Kreuzköpfen.
- Fig. 3: ein erstes erfindunsggemässes Ausführungsbeispiel mit alternierend abgestützten Kreuzköpfen;
- Fig. 4: ein zweites Ausführungsbeispiel mit alternierend abgestützten Kreuzköpfen und Führungselementen;
- Fig. 5: ein drittes Ausführungsbeispiel mit zwischen zwei Zugankern geführter Stützwand;
- Fig. 6: ein Ausführungsbeispiel mit transversaler Führungsklaue im Bereich der Mittelwand;
- Fig. 7: ein Ausführungsbeispiel mit transversaler Führungsschiene im Bereich der Mittelwand;
- Fig. 8: ein Ausführungsbeispiel gemäss Fig. 6 mit zentral geführtem Zuganker;
- Fig. 9: ein erfindungsgemässes Ausführungsbeispiel mit einem entfernbaren Halteelement zur Fixierung des Zugankers.

Der erfindungsgemässe Kreuzkopf-Grossdieselmotor, der im folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

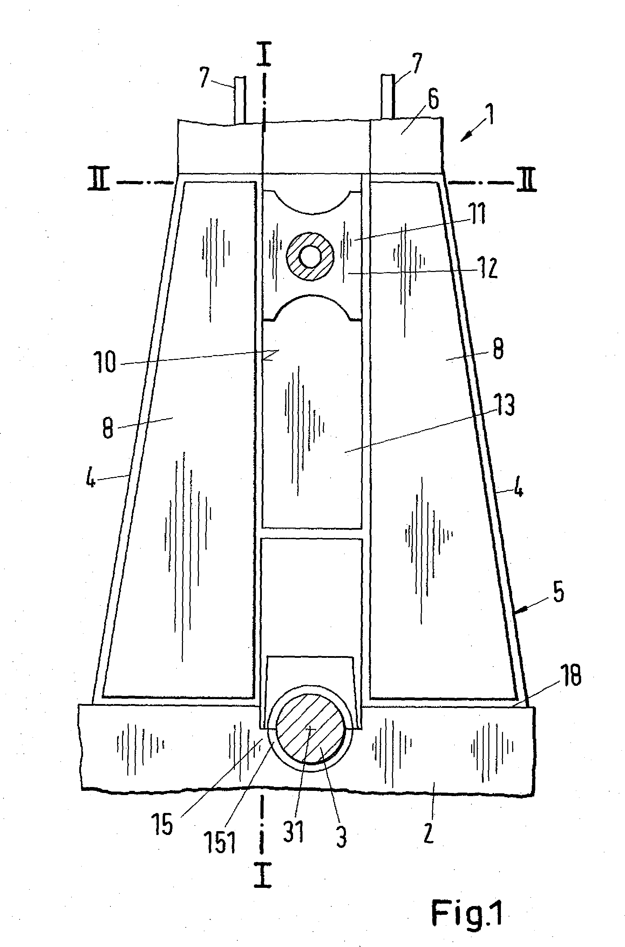

Fig. 1 zeigt schematisch im Schnitt einen bekannten Aufbau eines Kreuzkopf-Grossdieselmotors 1 mit Grundplatte 2, Ständer 5 und Zylindersektion 6. Die Zylindersektion 6 dient in an sich bekannter Weise zur Aufnahme von nicht dargestellten Zylindern. Der Ständer 5, der beispielsweise durch Zusammenschweissen von Stahlblechen entstanden ist, weist ein Bodenblech 18 sowie zwei Aussenwände 4 auf und bildet gemeinsam mit den darstellungsgemäss senkrecht verlaufenden Gleitflächen 10 zwei im Querschnitt trapezförmige Rahmen, die durch ein gemeinsames Deckblech miteinander verbunden sind. Die zwei gegenüberliegenden senkrecht verlaufenden Gleitflächen 10 werden durch eine Mittelwand 13, die zwischen den beiden trapezförmigen Rahmen angeordnet ist, abgestützt. Der Ständer 5 ist mit dem Bodenblech 18 auf der Grundplatte 2 angeordnet, die einen Lagersattel 15 mit Lagerschale 151 zur Lagerung einer Kurbelwelle 3 umfasst. Die Kurbelwelle 3 mit Kurbelwellenachse 31, die mit der Motorachse 31 zusammenfällt, ist in an sich bekannter Weise mit einem Kreuzkopf 12 über eine in Fig. 1 nicht gezeigte Schubstange 19 verbunden.

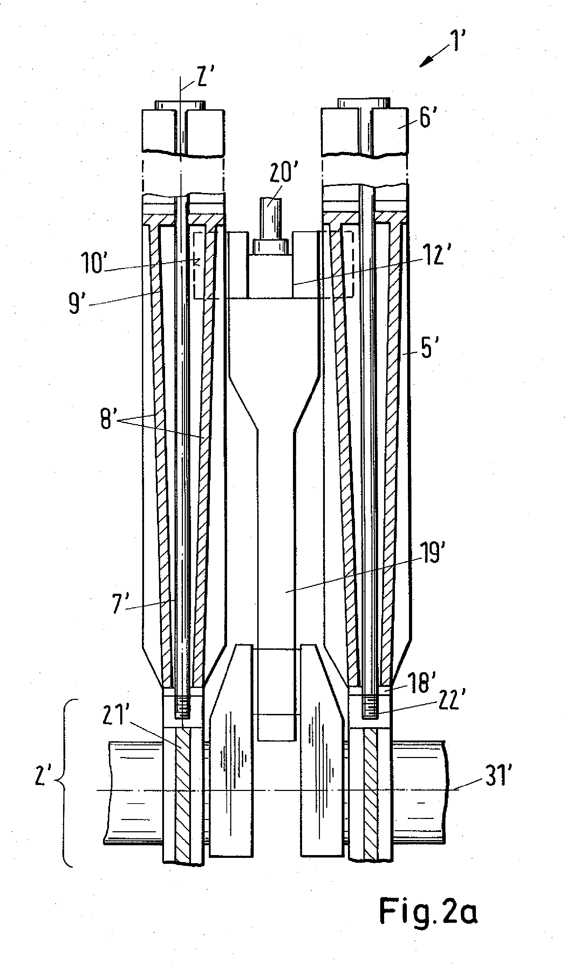

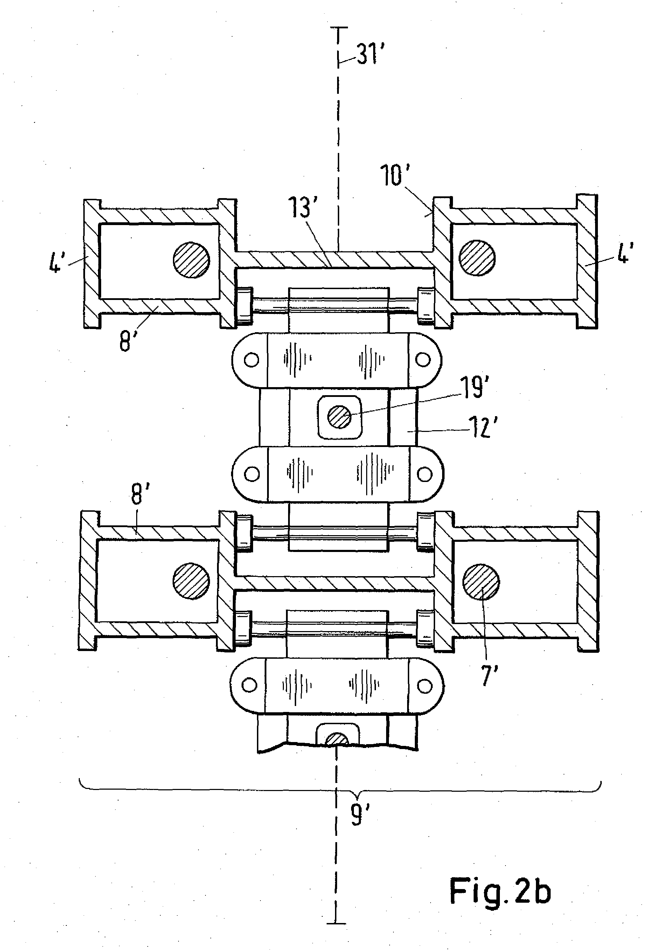

Die Fig. 2a und 2b zeigen jeweils einen Schnitt gemäss Fig. 1 entlang der Schnittlinie I - I bzw. entlang der Schnittlinie II-II durch einen aus dem Stand der Technik bekannten Grossdieselmotor, der zum besseren Verständnis der vorliegenden Erfindung im folgenden kurz beschrieben werden soll.

Zur Unterscheidung des Standes der Technik von der vorliegenden Erfindung, sind dabei in den Fig. 2a und 2b, die sich auf den Stand der Technik beziehen, die Bezugzeichen mit einem Hochkomma versehen, während in den übrigen Figuren, die sich auf die Erfindung beziehen, die Bezugszeichen kein Hochkomma tragen.

Der in Fig. 2a dargestellte Schnitt gemäss Fig. 1 entlang der Schnittlinie I - I durch einen aus dem Stand der Technik bekannten Kreuzkopf-Grossdieselmotor 1', zeigt einen Ständer 5', der auf der Grundplatte 2' angeordnet ist, sowie die Zylindersektion 6', die auf dem Ständer 5' platziert ist. Zwischen dem Ständer 5' und der Zylindersektion 6' ist ein Deckblech und zwischen dem Ständer 5' und der Grundplatte 2' ein Bodenblech 18' angeordnet. Die Zylindersektion 6' ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 20' mit dem Kreuzkopf 12' verbunden und im Zylinder hin- und herbewegbar angeordnet ist, einen Brennraum des Kreuzkopf-Grossdieselmotors 1'. Der Ständer 5' umfasst einen Stützkörper 9', der durch transversale Stützwände 8' doppelwandig ausgestaltet ist. Die Stützwände 8' tragen eine Gleitfäche 10' zur Führung des Kreuzkopfes 12', der mittels einer Schubstange 19' mit der Kurbelwelle 3' und mit der Kolbenstange 20' mit einem nicht dargestellten Kolben des Kreuzkopf-Grossdieselmotors 1' verbunden ist.

Die Grundplatte 2' umfasst zur Aufnahme und Lagerung der Kurbelwelle 3' einen Lagersattel 15' sowie ein transversales Stützelement 21', das im vorliegenden Beispiel einwandig ausgestaltet ist, aber natürlich auch, wie an sich bekannt, zweiwandig ausgestaltet sein kann. Zylindersektion 6', Ständer 5' und Grundplatte 2' sind durch einen Zuganker 7' unter Vorspannung miteinander verbunden. Dabei erstreckt sich der Zuganker 7' im Bereich des Ständers 5' zwischen den transversalen Stützwänden 8' innerhalb des doppelwandigen Stützkörpers 9' und ist im Lagersattel 15' der Grundplatte 2' in einem Bereich zwischen der Achse 31' der Kurbelwelle 3' und dem Ständer 5', also darstellungsgemäss oberhalb der Achse 31' der Kurbelwelle 3' in einer Gewindebohrung 22' fixiert.

Bei dem in Fig.2 dargestellten Beispiel erstrecken sich die transversalen Stützwände 8' des Stützkörpers 9' V-förmig in Richtung der Zylindersektion 6', das heisst der gegenseitige Abstand der Stützwände 8' eines Stützkörpers 9' vergrössert sich zunehmend in Richtung zur Zylindersektion 6'. Die Normalkräfte, die der Kreuzkopf 12' über die Gleitfächen 10' auf die Stützwände 8' und damit auf den Stützkörper 9' überträgt, sind bekanntlich nahe am oberen Totpunkt der Hin- und Herbewegung des Kolbens am grössten. Durch die V-förmige Gestaltung des Stützkörpers 9' ist dieser im darstellungsgemäss oberen Bereich des Ständers 5' relativ breit und kann daher die Normalkräfte des Kreuzkopfes 12' besonders gut aufnehmen bzw. in den Ständer 5' ableiten.

Der Zuganker 7' mit seiner Längsachse Z' ist mittig zwischen den transversalen Stützwänden 8' des Stützkörpers 9' angeordnet, wobei das einwandig ausgestaltete Stützelement 21' der Grundplatte 2', auf dem sich der Stützkörper 9' in der Grundplatte 2' abstützt, fluchtend zur Längsachse Z' des Zugankers 7' angeordnet ist. Der Zuganker 7' ist, insbesondere um Deformationen der Lagerschalen zu vermeiden, in einem Bereich zwischen der Achse 31' der Kurbelwelle 3' und dem Ständer 5', darstellungsgemäss also oberhalb der Achse 31'der Kurbelwelle 3', im Lagersattel in einer Gewindebohrung fixiert. Dadurch, dass das einwandige Stützelement 21' in der Grundplatte 2' fluchtend zur Längsachse Z' des Zugankers 7' und damit symmetrisch in Bezug auf die Stützwände 8' des Stützkörpers 9' angeordnet ist, ergibt sich eine besonders hohe Stabilität, ohne dass die Grundplatte 2' eine zu hohe Steifigkeit aufweist.

Fig. 2b zeigt für den aus dem Stand der Technik bekannten Motor der Fig. 2a einen weiteren Schnitt gemäss Fig. 1 entlang der Linie II - II. Dargestellt sind je zwei im Ständer 5' gegenüber angeordnete Stützkörper 9', die durch die Mittelwand 13' zwischen den Gleitflächen 10' gegeneinander abgestützt sind. Der Kreuzkopf 12' wird zwischen je zwei gegenüberliegenden Gleitflächen 10' von jeweils zwei benachbarten Stützkörpern 9' geführt. In jedem Stützkörper 9' erstreckt sich zwischen den Stützwänden 8' ein Zuganker 7'.

Die Grundplatte des Kreuzkopf-Grossdieselmotors der Fig. 2a und 2b weisen dabei ein einwandig ausgestaltetes transversales Stützelement in der Bodenplatte auf, das beim Zusammenbau des Motors problemlos gegengeschweisst werden kann, so dass die Probleme mit der einseitigen Schweissnaht, wie sie früher bei der aus dem Stand der Technik bekannten Grundplatten mit doppelwandigen Stützelementen üblich waren, vermieden werden. Die Zuganker sind bevorzugt als kurze Zuganker ausgeführt und in einem oberen Bereich des Sattels, das heisst zwischen der Achse der Kurbelwelle und dem Bodenblech des Ständers in einer Gewindebohrung fixiert. Dadurch werden Verspannungen im Lagersattel sowie Deformationen der Lagerschale durch den unter erheblicher Vorspannung im Lagersattel fixierten Zuganker weitestgehend vermieden. Die Steifigkeit der Grundplatte des Kreuzkopf-Grossdieselmotors der Fig. 2a und Fig. 2b wird insbesondere durch die kurzen Zuganker und die einwandig ausgestalteten Stützelemente optimiert. Da die Zuganker unter erheblicher Vorspannung in der Grundplatte verankert werden müssen, wurde üblicherweise eine Kombination von doppelwandigem Stützkörper im Ständer mit einwandigem Stützelement in der Grundplatte nicht in Betracht gezogen, da sowohl im unteren Bereich des Ständers und in den Bodenblechen, als auch im Bereich des Lagersattels mit nicht zu vermeidenden Biegebelastungen und daraus resultierenden nicht vertretbaren mechanischen Spannungen im Material gerechnet. Durch diese Art der Gestaltung der Grundplatte im Bereich des Zugankers, wie sie erstmals in der EP 1 382 829 angeregt wurde, konnten sowohl die früher befürchteten Probleme durch Biegebelastungen, als auch das bei einer solchen Konstruktion erwartete Fretting im Bereich der Grundplatte zufriedenstellend vermieden werden. Insbesondere wurde die Bodenplatte konstruktiv deutlich vereinfacht.

Allerdings hat, wie bereits erwähnt, die in den Fig. 2a und Fig. 2b dargestellte bekannte Lösung immer noch den Nachteil, dass doppelwandig ausgestaltete Stützkörper bzw. Ständer verwendet werden müssen, weil die Kreuzköpfe nicht alternierend an den Gleitflächen abgestützt sind.

Dieser Mangel wird erstmals durch die vorliegende Erfindung behoben.

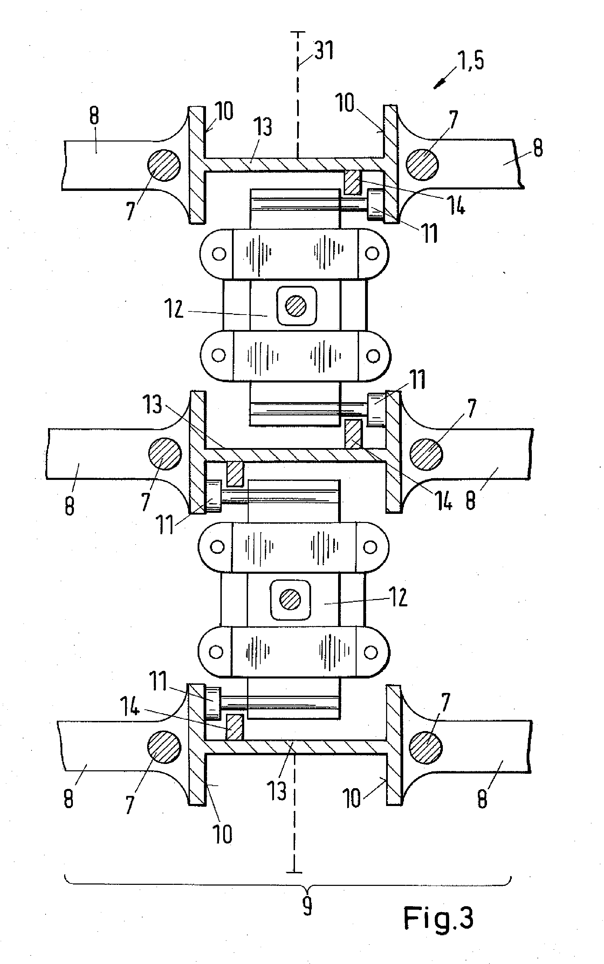

In Fig. 3 ist schematisch ein erstes Ausführungsbeispiel eines erfindungsgemässen Grossdieselmotors 1 mit alternierend abgestützten Kreuzköpfen 12 dargestellt.

Zu sehen ist ein Schnitt entlang der Linie II-II gem. Fig. 1. Zwei unmittelbar benachbarte Kreuzköpfe eines erfindungsgemässen Grossdieselmotors 1, der in der Regel insgesamt mehr als zwei Zylinder hat, z.B. sechs, zwölf, vierzehn oder noch mehr Zylinder hat, die nebeneinander entlang der Motorachse 31 angeordnet sind, sind an jeweils zwei unmittelbar benachbarten Stützkörpern 9 an den Gleitflächen 10 über Gleitschuhe 11 hin- und herbewegbar geführt.

Die Stützkörper 9 umfassen dabei jeweils zwei transversale Stützwände 8, die in Bezug auf die Motorachse 31 gegenüberliegen angeordnet sind und jeweils eine Gleitfläche 10 tragen. Die Gleitflächen 10 sind dabei in an sich bekannter Weise mit einer Mittelwand 13 zur Erhöhung der Stabilität des Ständers 5 miteinander verbunden. Bei dem speziellen Ausführungsbeispiel der Fig. 3 sind die Zuganker 7 in einer Durchführung innerhalb der Stützwände 8 geführt.

Gemäss der Erfindung sind zwei benachbarte Gleitschuhe 11 in Bezug auf die Motorachse 31 alternierend am Stützkörper 9 abgestützt. Bei dem Beispiel der Fig. 3 sind dabei zwei Gleitschuhe 11 eines und desselben Kreuzkopfes 12 an ein und derselben Gleitfläche 10 abgestützt, während die beiden Gleitschuhe 11 des benachbarten Kreuzkopfes 12 in Bezug auf die Motorachse 31 auf der gegenüberliegenden Seite an den entsprechenden Gleitflächen 10 abgestützt sind. Zur besseren, d.h. stabileren Führung der Gleitschuhe 11 an den Gleitflächen 10, sind an den Gleitflächen 10 Führungselemente 14 vorgehen, die die Gleitschuhe 11 und damit den Kreuzkopf 12 bei seiner Bewegung in senkrechter Richtung zur Motorachse 31 stabilisieren.

Obwohl jeder Kreuzkopf 12 jeweils nur auf einer Seite in Bezug auf die Motorachse 31 am Stützkörper 9 des Ständers 5 abgestützt ist, ist die Ableitung der Querkräfte auf den Ständer 5 über den gesamten Motor 1 gesehen ausserordentlich gleichmässig, da zwei benachbarte Gleitschuhe 11 in Bezug auf die Motorachse 31 alternierend am Stützkörper 9 abgestützt sind. Daher ist es erstmals möglich geworden, die Stützwände 8 einwandig auszubilden, ohne die Stabilität des Ständers 5 im Betriebszustand des Grossdieselmotors 1 negativ zu beeinflussen.

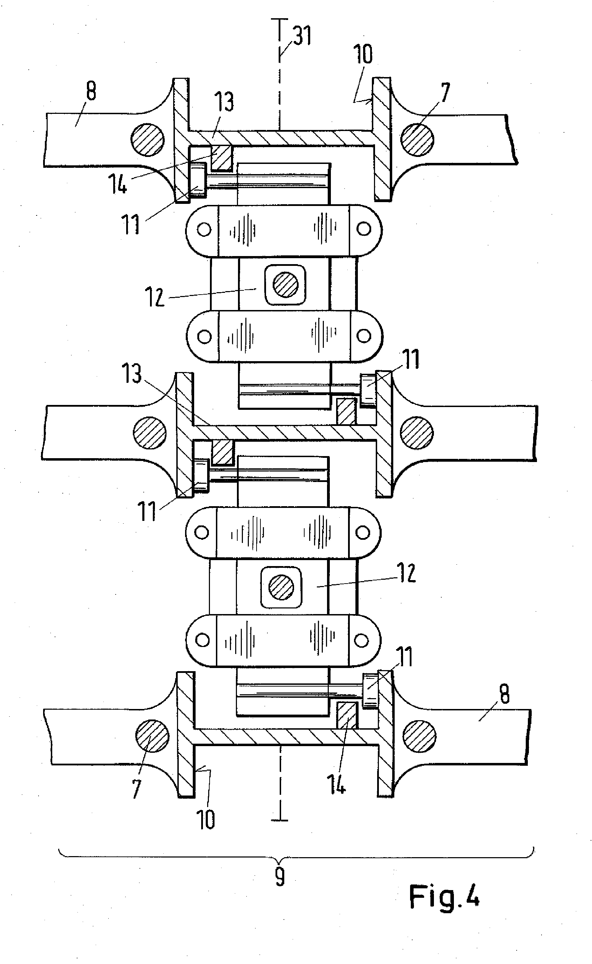

In Fig. 4 ist ein zweites Ausführungsbeispiel mit alternierend abgestützten Kreuzköpfen und Führungselementen schematisch dargestellt. Das Ausführungsbeispiel der Fig. 4 unterscheidet sich von demjenigen der Fig. 3 dabei nur dadurch, dass bei ein und demselben Kreuzkopf 12 die beiden Gleitschuhe 11 alternierend am Stützkörper 9 abgestützt sind. D.h., dass jeder Kreuzkopf 12 auf beiden Seiten der Motorachse 31 am Stützkörper 9 abgestützt ist, jedoch anders als im Stand der Technik alternierend und auf jeder Seite der Motorachse 31 mit nur einem einzigen Gleitschuh 11.

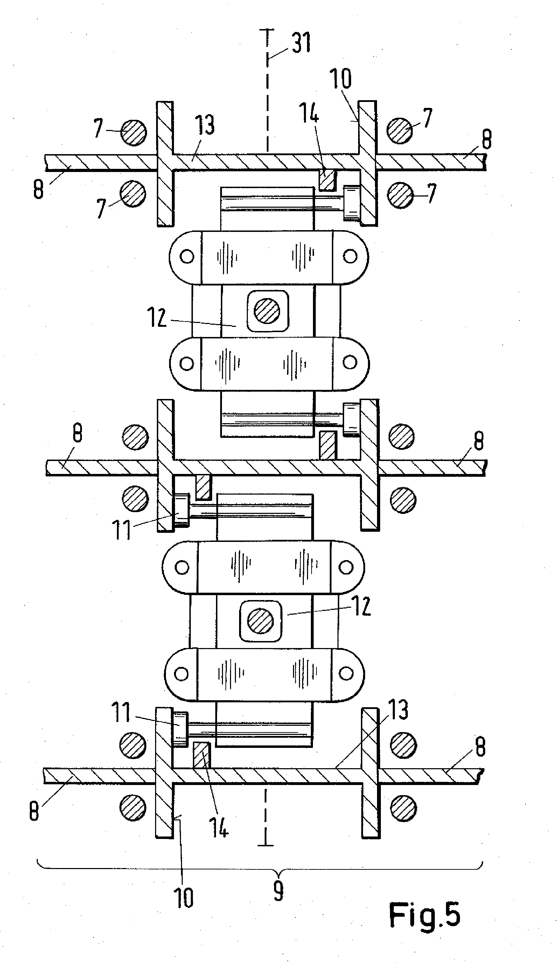

Bei dem dritten Ausführungsbeispiel der Fig. 5 sind die Kreuzköpfe 12 wie in dem Beispiel der Fig. 3 am Stützkörper abgestützt. D.h., zwei Gleitschuhe 11 ein und desselben Kreuzkopfes 12 sind an ein und derselben Gleitfläche 10 abgestützt, während die beiden Gleitschuhe 11 des benachbarten Kreuzkopfes 12 in Bezug auf die Motorachse 31 auf der gegenüberliegenden Seite an den entsprechenden Gleitflächen 10 abgestützt sind. Zur besseren, d.h. stabileren Führung der Gleitschuhe 11 an den Gleitflächen 10 sind auch hier an den Gleitflächen 10 Führungselemente 14 vorgesehen, die die Gleitschuhe 11 und damit den Kreuzkopf 12 in senkrechter Richtung zur Motorachse 31 bei ihrer Hin- und Herbewegung stabilisieren.

Der Unterschied zum Ausführungsbeispiel der Fig. 3 besteht darin, dass die Stützwände 8 auf beiden Seiten der Motorachse 31 zwischen zwei Zugankern 7 geführt sind. Das heisst, die Zuganker 7 sind nicht in einer Durchführung innerhalb der Stützwände 8 geführt, sondern jeweils neben den Stützwänden 8 angeordnet. Es versteht sich, dass neben den Stützwänden 8 auch jeweils zwei oder mehr Stützanker 7 vorgesehen sein können und auch im Beispiel der Fig. 3 durch jede Stützwand 8 mehr als ein Zuganker 7 durchgeführt sein kann.

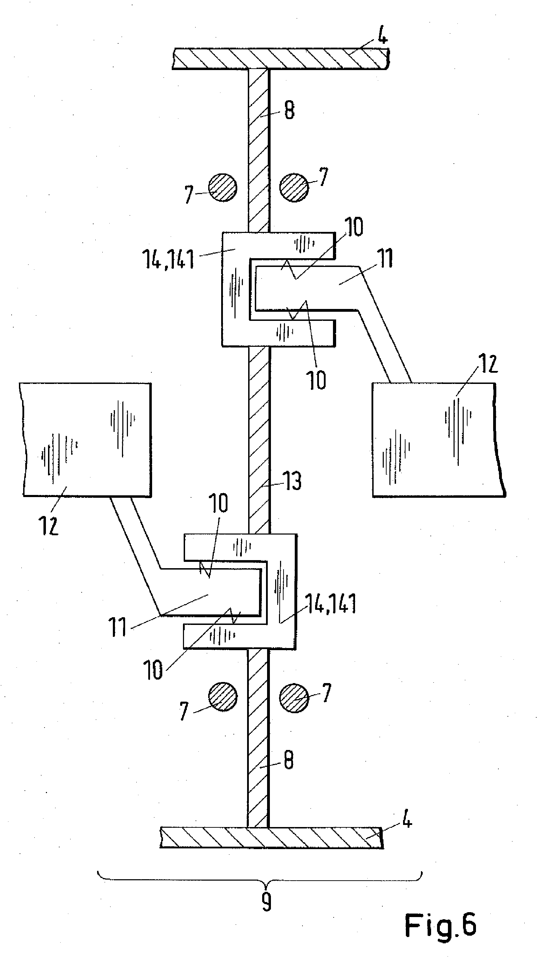

Die Fig. 6 zeigt ein weiteres erfindungsgemässes Ausführungsbeispiel, wobei an der Mittelwand 13 zwischen den Zugankern 7 eine transversale Führungsklaue 14, 141 im Bereich der Mittelwand 13 angeordnet ist. Die Gleitfläche 10 ist somit in der Führungsklaue 141 ausgebildet. Die Gleitschuhe 11 der Kreuzköpfe 12 sind bei ihrer Hin- und Herbewegung in der Führungsklaue 141 beidseitig sicher und alternierend geführt.

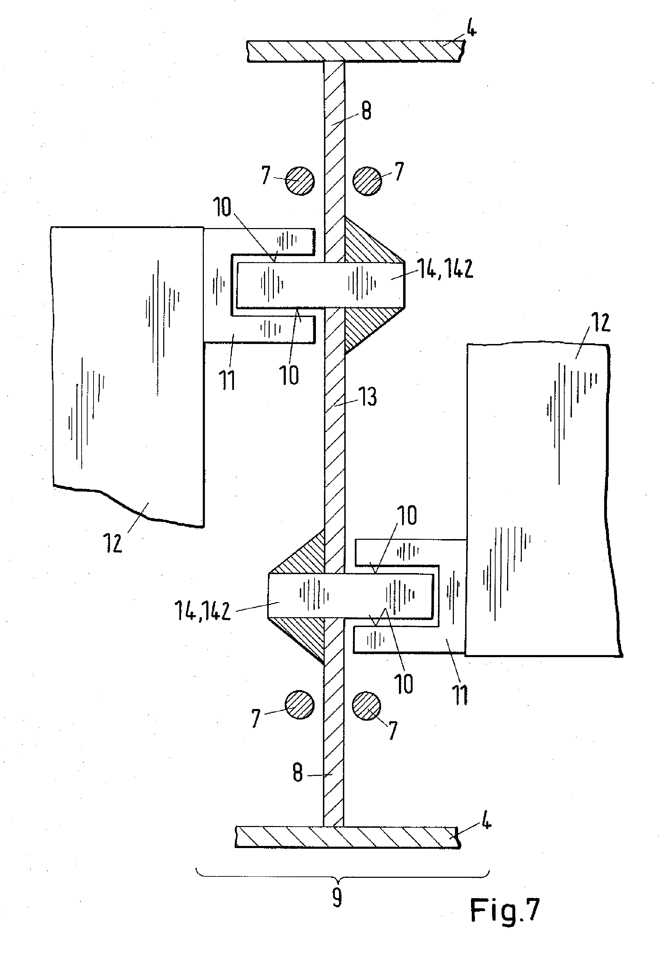

Das weitere Ausführungsbeispiel der Fig. 7 mit einer transversalen Führungsschiene 14, 142 im Bereich der Mittelwand 13 unterscheidet sich vom Beispiel der Fig. 6 dadurch, dass nunmehr der Gleitschuh 11 als Gleitschuhklaue 11 ausgeführt ist, der die Führungsschiene 14, 142 umschliesst und so eine sichere Führung des Kreuzkopfes 12 bei seiner Bewegung im Betriebszustand gewährleistet.

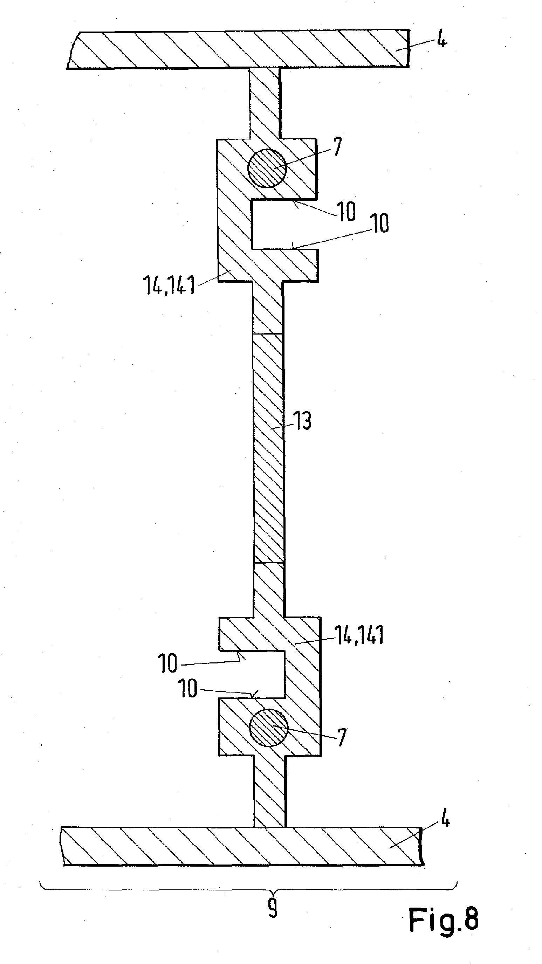

Fig. 8 zeigt ein Ausführungsbeispiel gemäss Fig. 6, wobei der Zuganker 7 hier zentral in einer Durchführung der transversalen Stützwand 8 geführt ist, wobei im Übergangsbereich von der Stützwand 8 zur Mittelwand 13 am Stützkörper 9 eine transversale Führungsklaue 14, 141 ausgebildet ist, in die die Gleitschuhe 11 in Bezug auf die Motorachse 31 alternierend am Stützkörper 9 abgestützt sind.

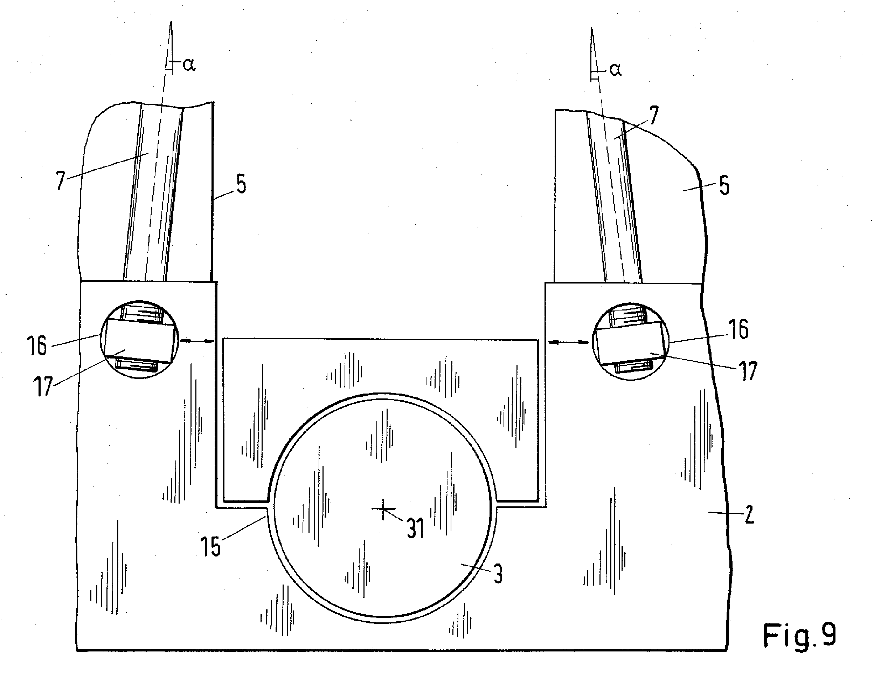

Fig. 9 zeigt für einen erfindungsgemässen Grossdieselmotor 1 ein bevorzugtes Ausführungsbeispiel zur Befestigung des Zugankers 7 in der Grundplatte 2 mit einem entfernbaren Halteelement 17 in einer Aussparung 16, wobei diese Art der Befestigung des Zugankers 7 in der Grundplatte 2 an sich bereits aus der EP-Anmeldung EP 06 125603.8 bekannt ist.

Bei dem Ausführungsbeispiel der Fig. 9 eines erfindungsgemässen Kreuzkopf-Grossdieselmotors 1 ist die Kurbelwelle 3 mit Längsachse 31 in an sich bekannter Weise im Lagersattel 15 gelagert und mit einem Lagerdeckel 151 gesichert. Der Zuganker 7 ist erfindungsgemäss im Lagersattel 15 bzw. in der Bodenplatte 2 in einem Bereich zwischen der Längsachse 31 und der Kurbelwelle 3, darstellungsgemäss also oberhalb der Längsachse 31, in der Aussparung 16 mittels eines aus der Aussparung 16 entfernbaren Halteelements 17 fixiert. Bei dem in Fig. 9 gezeigten Ausführungsbeispiel weist der Zuganker 7 im Einbauzustand im Bereich der Aussparung 16 ein Gewinde auf, mit welchem der Zuganker 7 im Halteelement 17, das hier eine Zugankermutter 17 ist, sicher verschraubt werden kann. Dabei ist der Zuganker 7 nicht direkt mit dem Lagersattel 15 bzw. der Grundplatte 2, wie aus dem Stand der Technik bekannt, verschraubt, sondern ist lediglich durch eine in Fig. 9 nicht sichtbare Bohrung durch den Lagersattel 15 bis in die Aussparung 16 frei durchgeführt, wo der Zuganker 7 zur Fixierung mit der Zugankermutter 17 verschraubbar ist.

Es versteht, dass die Erfindung nicht auf die geschilderten Ausführungsbeispiele beschränkt ist und insbesondere alle geeigneten Kombinationen der beschriebenen speziellen Beispiele durch die Erfindung erfasst sind.

## Patentansprüche

1. Kreuzkopf-Grossdieselmotor mit einer Grundplatte (2) zur Aufnahme einer sich entlang einer Motorachse (31) erstreckenden Kurbelwelle (3), einem zwei Aussenwände (4) umfassenden Ständer (5), welcher auf der Grundplatte (2) angeordnet ist, sowie eine auf dem Ständer (5) angeordnete Zylindersektion (6) zur Aufnahme von Zylindern, wobei die Grundplatte (2), der Ständer (5) und die Zylindersektion (6) durch zwei Zuganker (7) miteinander verbunden sind, die sich im Ständer (5) jeweils im Bereich eines durch zwei transversale Stützwände (8) einwandig ausgestalteten Stützkörpers (9) erstrecken, und der Stützkörper (9) zwei Gleitflächen (10) zur Abstützung jeweils eines Gleitschuhes (11) eines Kreuzkopfes (12) umfasst, **dadurch gekennzeichnet, dass** mindestens zwei benachbarte Gleitschuhe (11) in Bezug auf die Motorachse (31) alternierend am Stützkörper (9) abgestützt sind.

2. Kreuzkopf-Grossdieselmotor nach Anspruch 1, wobei der Zuganker (7) durch die transversale Stützwand (8) geführt ist.

3. Kreuzkopf-Grossdieselmotor nach einem der Ansprüche 1 oder 2, wobei der Zuganker (7) neben der transversalen Stützwand (8) geführt ist und bevorzugt an jeder transversalen Stützwand (8) mindestens zwei Zuganker (7) vorgesehen sind.

4. Kreuzkopf-Grossdieselmotor nach einem der vorangehenden Ansprüche, wobei zwei Gleitschuhe (11) ein und desselben Kreuzkopfes (12) in Bezug auf die Motorachse (31) alternierend am Stützkörper (9) abgestützt sind.

5. Kreuzkopf-Grossdieselmotor nach einem der vorangehenden Ansprüche, wobei an einer Mittelwand (13) und / oder an der Gleitfläche (10) des Stützkörpers (9) ein Führungselement (14) zur Führung des Gleitschuhs (11) vorgesehen ist.

6. Kreuzkopf-Grossdieselmotor nach einem der vorangehenden Ansprüche, wobei das Führungselement (14) in Form einer transversalen Führungsklaue (141) ausgebildet ist.

7. Kreuzkopf-Grossdieselmotor nach einem der vorangehenden Ansprüche, wobei das Führungselement (14) in Form einer transversalen Führungsschiene (142) ausgebildet ist.

8. Kreuzkopf-Grossdieselmotor nach einem der vorangehenden Ansprüche, wobei die Grundplatte (2) mindestens einen Lagersattel (15) zur Lagerung der Kurbelwelle (3) aufweist und wobei der Zuganker (7) im oder am Lagersattel (15) in einem Bereich zwischen der Achse (31) der Kurbelwelle (3) und dem Ständer (5) fixiert ist.

9. Kreuzkopf-Grossdieselmotor nach einem der vorangehenden Ansprüche, wobei der Zuganker (7) im Lagersattel (15) in einer Gewindebohrung fixiert ist, und / oder wobei sich der Zuganker (7) durch eine Bohrung im Lagersattel (15) erstreckt und durch eine Verschraubung fixiert ist.

10. Kreuzkopf-Grossdieselmotor nach einem der vorangehenden Ansprüche, wobei der Zuganker (7) im Lagersattel (15) in einem Bereich zwischen der Längsachse (31) der Kurbelwelle (3) und dem Ständer (5) in einer Aussparung (16) mittels eines aus der Aussparung (16) entfernbaren Halteelements (17) fixiert ist.
